# EUROPEAN PATENT SPECIFICATION

(11) **EP 3 472 408 B1**
(45) Date of publication and mention of the grant of the patent: **02.09.2020**
(21) Application number: 17751125.0
(22) Date of filing: 21.06.2017
(51) Int. Cl.: E04H 1/12, B67D 7/78, B60S 5/02

(54) **MODULAR PREFABRICATED PETROL STATION AND RELATED MOUNTING METHOD**
MODULARE VORGEFERTIGTE TANKSTELLE UND ZUGEHÖRIGES MONTAGEVERFAHREN
STATION D'ESSENCE PRÉFABRIQUÉE MODULAIRE ET PROCÉDÉ DE MONTAGE ASSOCIÉ

(30) Priority: 21.06.2016 IT UA20164651
(43) Date of publication of application: 24.04.2019
(73) Proprietor: Hitrac Fuel Systems S.r.l., 00144 Roma (IT)
(72) Inventor: WERTH, Peter, 39057 Appiano sulla Strada del Vino (BZ) (IT); GUIDO, Carmine, 87036 Rende (CS) (IT)
(74) Representative: Barbaro, Gaetano
(86) International application number: PCT/IB2017/053688
(87) International publication number: WO 2017/221165

(56) References cited:
- GB-A- 2 325 456
- US-A- 4 638 920
- US-A- 5 954 085
- US-A1- 2004 175 236

## Description

### TECHNICAL FIELD

The present disclosure relates in general to the field of petrol stations and more particularly to a pre-assembled petrol station that may be easily transported and mounted/dismounted at a desired place and a related mounting method.

### BACKGROUND OF THE INVENTION

Petrol stations are typically composed of fuel dispensers connected throughout suitable conduits below ground to buried fuel reservoirs placed at a distance.

Petrol stations are considered as a set of elements that, grouped in a single system, constitute the plant for dispensing fuel. Typically, the elements that compose a petrol station are the following ones:
1. one or more fuel reservoirs. They are made of iron (Fe) with a double wall as prescribed by the rules UNI EN 12285-1 with a hollow space continuously monitored by suitable static or dynamic devices (according to the rules EN 13160),
2. a plant for dispensing fuel, commonly realized in PE (according to the rules EN 14125) with a double wall (according to the rules UL 971) with a hollow space continuously monitored by suitable dynamic devices (according to the rules EN 13160). It connects the reservoirs to the dispensers and to the displaced charging place.
3. Fuel dispensers for single or multiple product.
4. A charging place. It is an unessential element, because tanker trucks may load fuel directly by staying over fuel reservoirs. Often it is installed when reservoirs are numerous or cannot be easily accessed.
5. Interface containers between a reservoir and tubing. They are manholes "PDU" or walkable manhole installed over the reservoir and the manholes below the dispenser, that allow connections in a watertight environment among the various elements.
6. Shelter.
7. Oil separator for water treatment of drainage. Built according to the rules UNI EN 858-1 as per regional regulations for transposition of the Italian Legislative Decree 152/06.

The construction of a new petrol station or its modification or expansion is a complex and expensive business.

Firstly, it is necessary to identify a sufficiently large space where to install storage tanks, to place any decentralized load, to install a shelter and dispensers.

Installing a new mechanical plant requires a one-month-long business activity on site, plus time to acquisition and management of materials. This is also the case, especially as the companies that interfere with the construction site are very numerous and often cannot work jointly: designer and job manager, construction company for excavation, mechanical engineering company for the realization of the fluidic plant, company that supplies and installs the shelter, company that installs and heads dispensers and acceptors. Additionally, delays should be added because of companies that do not work at the construction site but provide equipment such as: tanks, pipework and mechanical components, water treatments.

Another critical aspect is due to the fact that a petrol station must be equipped to treat waters that drain the area of the commercial activity of supplying fuel. The oil separator must be placed on the square, and it must be suitably partitioned for water collection. Investment in a petrol station is not very flexible because the built-in components are practically unmovable. As a consequence, the choice of the site on which to build a petrol station is of paramount importance: if such a choice is found to be wrong, the installed equipment and the initial investment are lost.

US5954085, upon the disclosure of which the preamble of claim 1 is drafted, illustrates a fuel dispensing system comprising a foundation module including an underground fuel reservoir to store fuel to be dispensed and a conduit containment trough to house a fuel supply conduit and fuel dispensing conduit therein.

US4638920 discloses an underground storage facility for various liquids, such as gasoline, having a cylindrical storage tank within a substantially rectangular vault with a bottom inclined downwardly so as any liquid leaking from the tank will run down the bottom wall and accumulate in the lower end of the vault.

US2004175236 discloses an improved storage reservoir assembly comprising a storage reservoir suitable for being buried beneath ground level and suitable for containing a fluid and at least one support unit attached to or disposed adjacent to the reservoir and suitable for attachment to an above-ground canopy.

GB2325456 discloses a modular petrol station comprising a fuel tank storage arranged within frame elements of a pre-determined size which forms a removable tank module.

### SUMMARY OF THE INVENTION

To address at least some of the abovementioned problems, the applicant has designed a prefabricated petrol station with a modular structure, which can be easily transported and assembled/disassembled at the construction place without deterioration of the used materials, which can be fully recovered and installed elsewhere. The structure is organized in such a way as to comply with safety constraints imposed by the laws both with regard to fuel tank safety, as well as solidity of fixing of pillars supporting a suspended shelter over the fuel dispensing pump.

This objective has been attained with a modular prefabricated petrol station as defined in the appended claims.

According to one embodiment, the prefabricated basin for containing the fuel tank is made of reinforced concrete and the tank contained therein is buried in a filling of inert material, such as sand.

According to another embodiment, the modular prefabricated petrol station includes a removable shelter mounted on pillars that are raised from the first support frame passing through interstices of the second support frame.

Moreover, it is disclosed a method of mounting a prefabricated modular petrol station.

### BRIEF DESCRIPTION OF THE DRAWINGS

Figures 1 to 4 are different views in section of a modular prefabricated petrol station according to an embodiment of this disclosure.
Figure 5 is a perspective view of the prefabricated petrol station of figures from 1 to 4.
Figure 6 shows the prefabricated petrol station of figure 5 installed at a refueling area.
Figure 7 shows in transparence the bottom portion of the prefabricated petrol station of figure 5.
Figure 8 is a sectional view of the bottom part of the prefabricated station of figure 5.
Figures 9 and 10 are front and side sectional views of a modular prefabricated petrol station according to another embodiment of this disclosure.
Figures 11 and 12 are front and side views, respectively, showing the grid of traverses of the first supporting frame laying on the bottom of the hole.
Figure 13 is top view partially in section of the station of figures 9 and 10 showing the first frame 3 with buried pillars 14 laying on the bottom and the walls of the basin 1.
Figure 14 is a top view partially in section of the station of figures 9 and 10 showing a third frame 16, that joins the buried pillars 14 and that is laying on the upper edge walls of the basin 1.
Figure 15 is a top view partially in section of figures 9 and 10 that shows yoke traverses 15, that join the buried pillars 14, and on which the supporting pillars 11 of a shelter are fixed.

### DETAILED DESCRIPTION

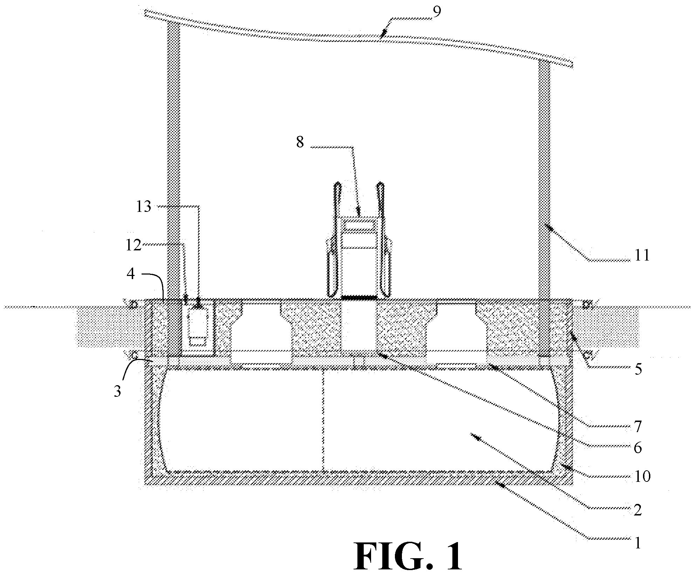

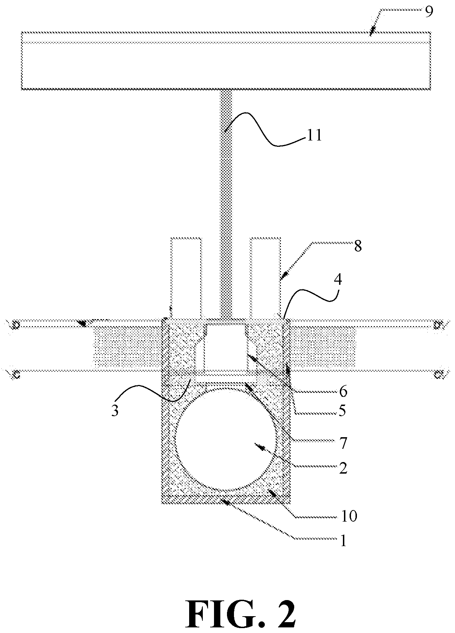

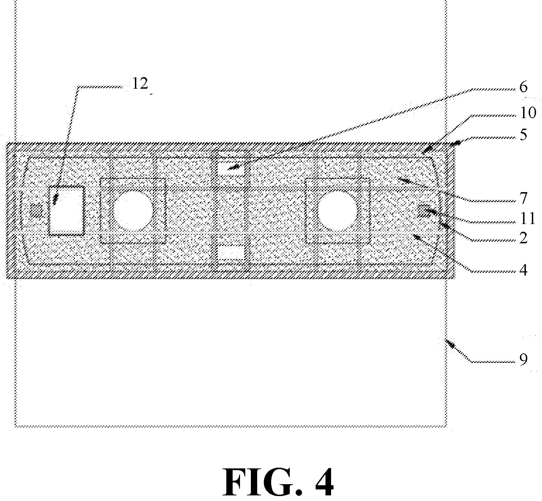

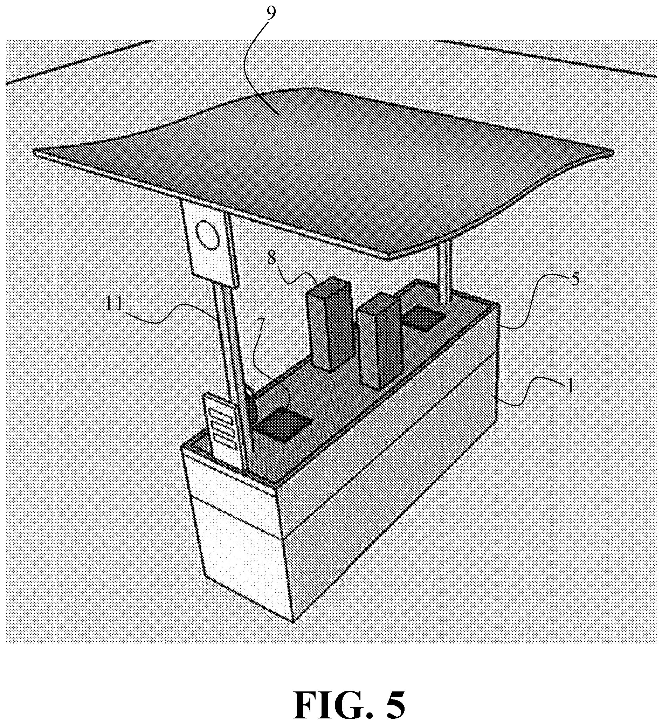

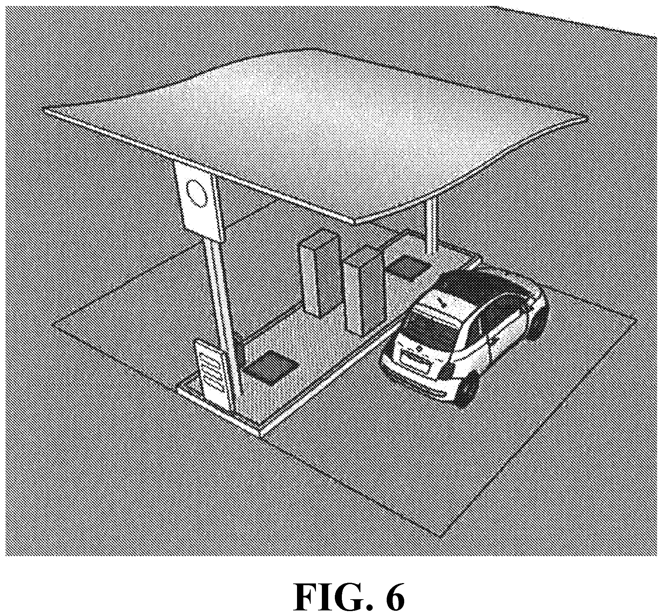

Figures 1 to 4 show several sections of a form of an embodiment of a modular prefabricated petrol station according to this disclosure. If mounted on the ground, the prefabricated station modulation would appear as shown in Figure 5, with a containment basin 1 and an annular structure 5 superposed thereon. Once it has been installed below ground at the site where a petrol station service area has to be built, the modular prefabricated petrol station will appear as shown in Figure 6 and will be externally indistinguishable from any other fixed petrol station.

The modular prefabricated station of this disclosure can be installed in a short time and may be dismantled quickly, recovering practically all the parts of which it is composed, if its function is to temporarily overcome the momentary unavailability of fixed plants to be restructured, or when entrepreneurs realize that the location at which the petrol service is not profitable. It may be interred, it is prefabricated and easily removable. The only element not enclosed in the modular prefabricated petrol station of this disclosure is the so-called "decentralized load", as it is not possible to fill the fuel tanks directly under the shelter.

The modular prefabricated petrol station of this disclosure comprises substantially a prefabricated basin 1 of structurally stable material (e.g. concrete, reinforced concrete, etc.), resistant to external and internal stresses. The basin is hydrocarbon-resistant and is watertight, so any spills will be segregated inside it and highlighted by an oil detection alarm system. Inside the prefabricated basin, a fuel tank 2 is installed, preferably buried inside a layer 10 of inert material, for example a sand layer. The tank 2 can be either with a single wall or with a double wall, with a single containment chamber or subdivided into 2 containment chambers to contain different types of fuel. Conveniently, the station will be equipped with any electronic device for controlling levels and interspaces.

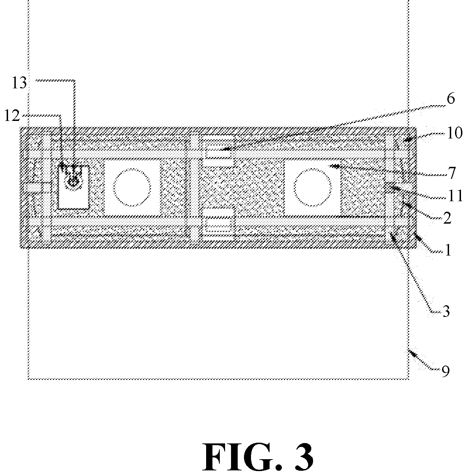

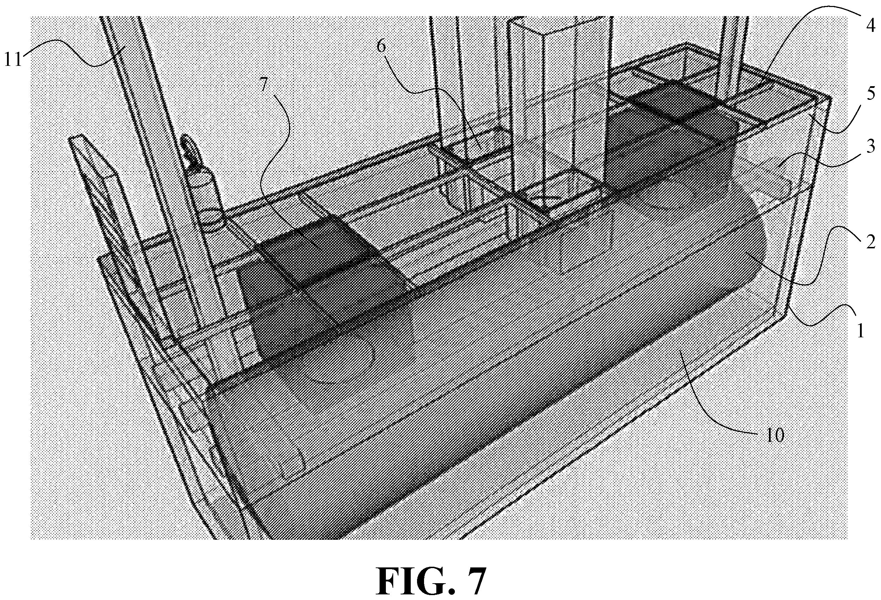

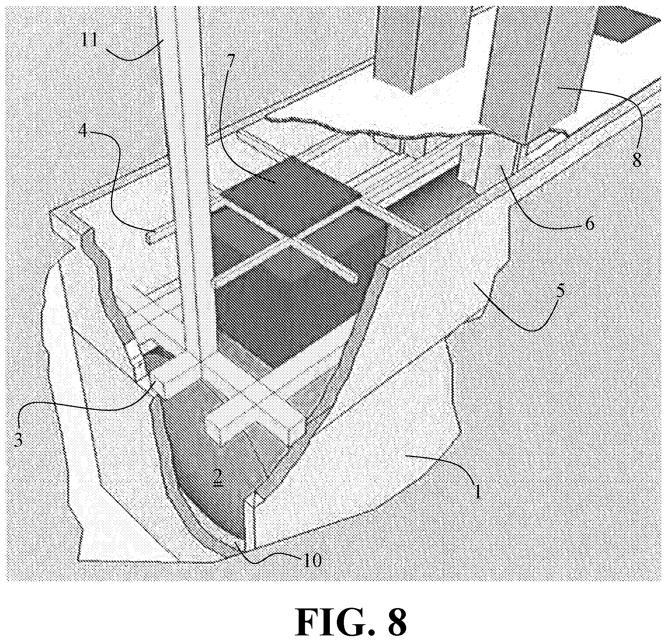

A peculiar aspect of the prefabricated station according to an embodiment of this disclosure, illustrated in figures 1 to 8, is the fact that above the basin 1 there is a first support frame 3 adapted to support a suspended shelter to shield the dispensing pump from the rain. The first frame 3 has a grid of traverses, clearly visible in figure 3 and in the transparence view of figure 7 and in the view of figure 8, which is mounted suspended on the upper edges of the side walls of the prefabricated basin 1. To the grid of traverses of the first frame 3 are secured pillars 11 for supporting a shelter 9. Above the upper edges of the prefabricated basin 1 there is an annular structure 5 separated from the prefabricated basin 1, that has side walls which define a lower perimeter that matches with the upper edges of the prefabricated basin 1, as clearly shown in figure 5.

The tank 2 has to be buried deep and it is difficult to realize and manage a single piece basin 1 that contains the tank in depth and has a height so as to arrive practically at the floor level of the road. For this reason, it is simpler to construct a relatively small, relatively low basin 1, that is designed to be deeply interred, and to superpose the annular structure 5 to extend the height of the basin 1 until it reaches the level of the ground.

In the embodiment shown in figures 1 to 8, the annular structure 5 extends the height of the basin 1 so as to be over the grid of traverses of the first support frame 3 and to hold it firmly in the mounted position suspended above the prefabricated basin 1. Such a configuration provides stability to the frame 3, without directly fixing it to the fuel tank 2.

Typically, the annular structure 5 is made of the same material as the prefabricated basin 1 and is laid over the prefabricated basin 1 during assembly.

In order to support all other components required in a petrol station, a second frame 4 distinct from the first support frame 3 has a respective grid of traverses suspended on the upper edges of the annular structure 5. This second frame 4 is configured to support at least one supply manhole 6, at least one inspection manhole 7, both in fluid communication with the fuel tank 2, and to support at least one fuel dispensing pump 8 connected to the respective supply manhole 6.

As usual in all service areas, each petrol station has at least two different types of fuel and as many dispensing pumps 8. The tank 2 may then be compartmented into 2 containment chambers, one by type of fuel, so there will be 2 walkable inspection manholes 7, as shown in the figures.

As apparent from the figures, the first frame 3 intended to support a shelter 9 is below the second frame 4 for the installation of the dispensing pumps, of the walkable inspection manholes and of the supply manholes, as well as intended to the installation of payment terminals.

Typically, the basin 1 with the tank 2 will be interred, so as the tank 2 is below the road surface. The annular structure 5 may also be interred so as the second frame 4 is at the level of the road surface, or it may be partially off-ground.

At least two supporting pillars 11 are secured to the first support frame 3 for a suspended shelter 9. These pillars 11 are then fixed below the road surface and in the embodiment of figures 1 to 8 they pass throughout interstices of the second frame 4, to rise above the road surface and support the shelter 9. With this configuration, the weight of the suspended shelter 9 is withstood by the first supporting frame 3, which is buried, and not by the second frame 4, typically at the road level, on which the inspection manholes 7 and the dispensing pumps 8 are installed.

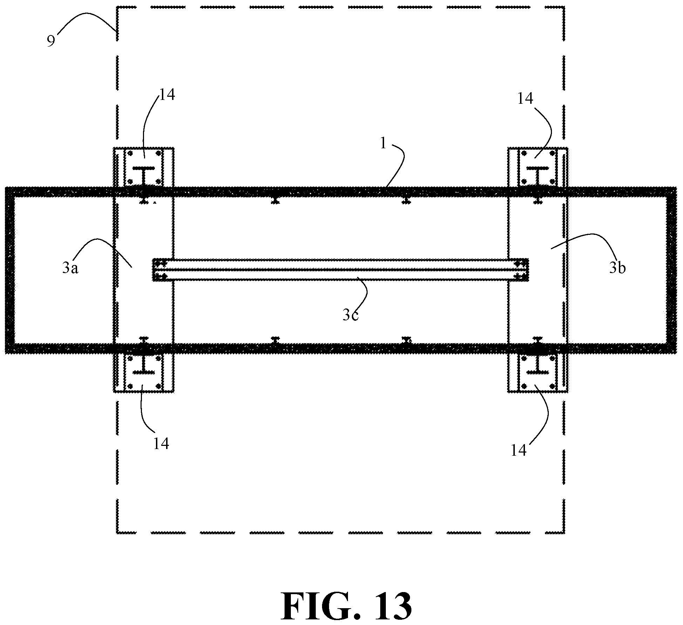

The applicant has found that it is possible to securely hold a shelter even in another way, always without fixing it directly to tank 2, that should be avoided at all costs for safety reasons. An alternative embodiment is illustrated in figures from 9 to 15, using the same numeral references as in figures 1 to 8 to designate corresponding features. This other embodiment differs from the one just illustrated by the fact that the grid of traverses of the first support frame 3 is laid at the bottom of the hole and is overlaid by the basin 1 laying thereon. As shown in the partially sectional view of figure 13, the support frame 3 has two rectangular traverses 3a, 3b, preferably made of concrete, joined by a beam 3c, which may for example be of the HEA300 type. To the traverses 3a and 3b, the support pillars 11 of the shelter 9 will be fixed.

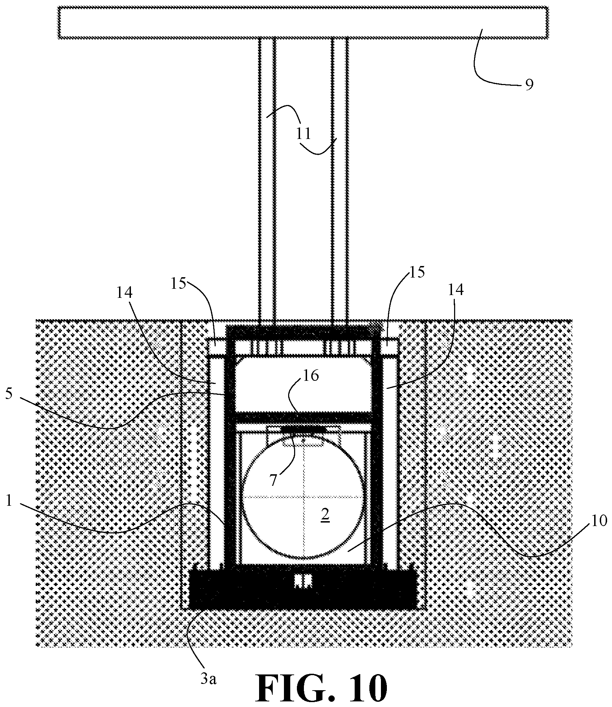

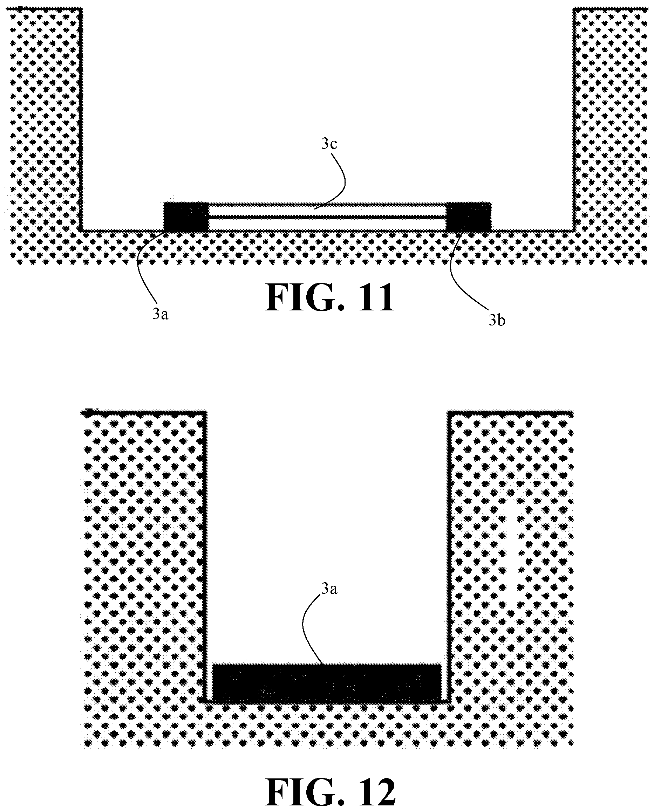

This embodiment is preferred because, while in the embodiment of figures 1 to 8 only the weight of the annular structure 5 prevents the first supporting frame 3 from moving, in the embodiment of figures 10 to 15 it is instead the overall weight of the annular structure 5, of the basin 1, of the sand 10, and of the tank 2 with all its content to hold the first supporting frame 3. The first supporting frame 3 is therefore more firmly anchored, but always without being fixed directly to tank 2.

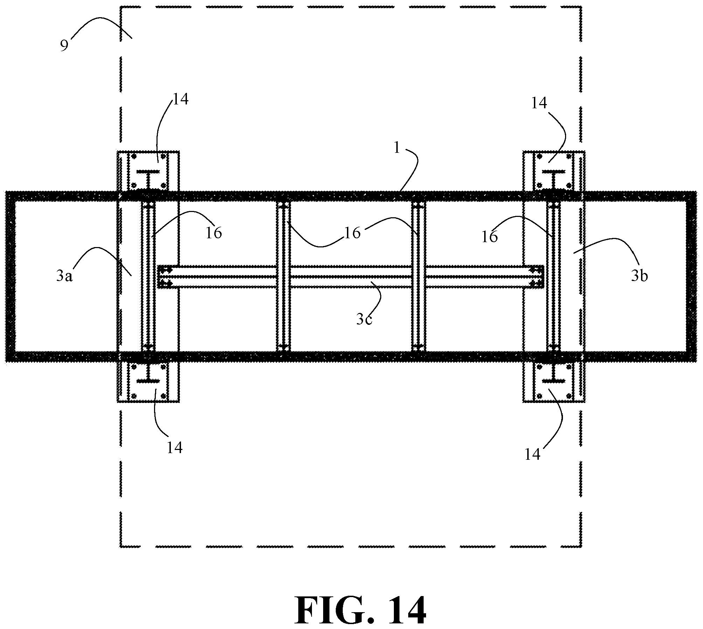

In order to provide additional stability to the structure and to support an oil separator, a third supporting frame 16 (figure 14) is inserted with a third grid of traverses joining the interred pillars 14, the third grid of traverses 16 being mounted over the upper edge of the basin 1 and below the bottom edge of the annular structure 5.

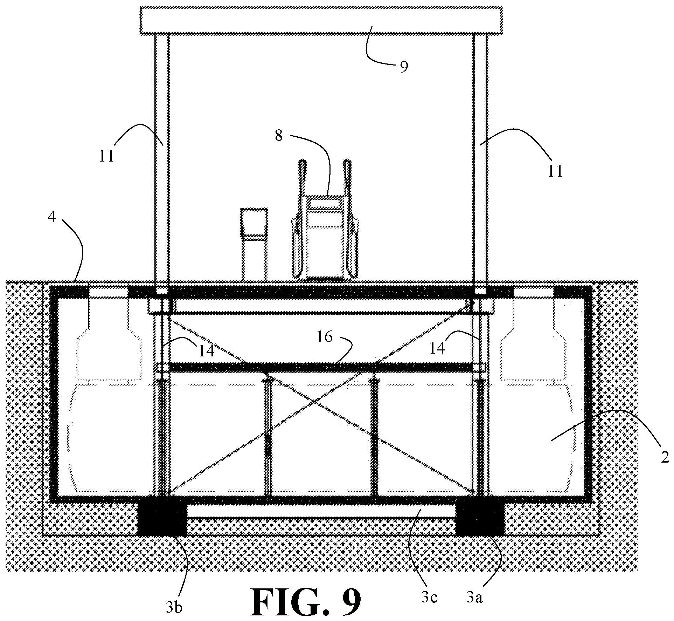

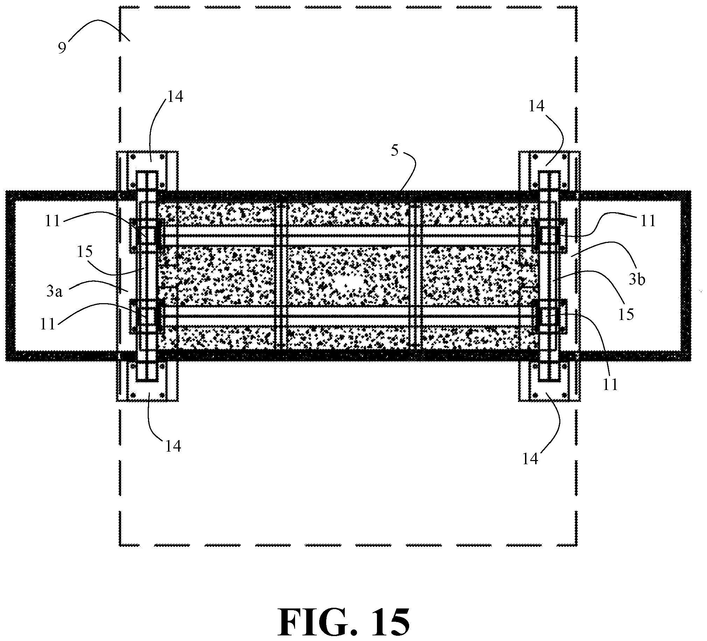

The uprights 11 of the shelter 9 may be fastened to the first supporting frame 3 in several ways. For example, as shown in figures 9 to 15, from the grid of traverses 3, resting on the bottom of the hole and underneath the basin 1, there are two pairs of underground pillars 14 running along the outer walls of the basin 1 and of the annular structure 5. On each pair of buried pillars is mounted a respective yoke traverse 15, better visible in figure 15, each of which is secured at least to a respective supporting pillar 11 of the shelter 9. Conveniently, yoke traverses 15 pass throughout respective grooves of the upper edge of the annular structure 5, so that they can be easily mounted after positioning the annular structure 5.

As in the embodiment of figures 1 to 8, the supporting pillars 11 of the shelter may pass through interstices of the grid of traverses of the second supporting frame 4.

According to a variant not shown in the figures, there may be supporting pillars 11 of the shelter joined directly to the underground pillars 14.

The prefabricated station of this disclosure will conveniently be provided with an inspectionable oil separation basin 12, supported by the first frame 3, in the embodiment of figures 1 to 8, or supported by the third frame 16 in the embodiment of figures 9 to 15. The basin 12, for collecting rainwater and drainage from the surface destined to fuel dispensing, may contain a filter 13 for separating water from mineral oils and hydrocarbons, for example a coalescence filter 13, so that pollutants are filtered before draining into the sewer. Typically, the basin 12 will be made of steel or fiberglass or any other material suitable for collecting waters, polluted by mineral oils and hydrocarbons, compatible with current regulations.

Conveniently, the modular prefabricated station according to this disclosure will be equipped with double wall pipes prefabricated in factory, that have only be connected to the terminals on the tank 2 and to the dispensing pumps 8. In order to complete the prefabricated petrol station, it will have a decentralized load with multiple inlets to feed several tanks possibly placed in parallel, and there will also be a connection system among the compartments of the tank and the decentralized load. It is the sole part of the plant, along with the decentralized load, that does not weigh on the basin. For this reason, the pipes will pass throughout a conduit made of concrete or similar material, that can be inspected and that is sealed to prevent any risk of contamination with the outside.

Conveniently, there will also be a control panel for controlling interstices because the double walls have to be monitored continuously. The control unit will be mounted on a plate secured to the second frame 4 and it may be connected to a remote alarm management server.

To comply with legal requirements, the modular prefabricated petrol station of this disclosure, once assembled, will be delimited by water collection channels that will surround the so-called "hot areas" (below the shelter, the decentralized load).

A continuous operating oil separator will be conveniently integrated into the basin 1. A collecting pipe will convey drawing water to the oil separator built in accordance with UNI EN 858-1. At the outlet, the drawing water will be sent to the receptor authorized from time to time.

The prefabricated petrol station of this disclosure may be used in all cases in which an entrepreneur intends to invest in a gas station but wants to be able to venture out quickly if the site is unprofitable due to poor passage of users. The station is removable and allows for fast disassembly for the subsequent reuse of all installed components. At present, the possibility of dismantling traditional service areas is still present, but in these dismantling nothing is recovered but the fuel dispensers and some electromechanical components off-ground. In addition, dismantling always poses environmental problems, while in case of the petrol station of this disclosure every possible spillage is delimited and collected by the basin and by the containment channels.

It also allows an entrepreneur to make an investment on a low-impact equipment that can be paid with a monthly fee, without having to face large investments required by traditional service areas. In addition, it can be used as a removable temporary station.

In conclusion, the advantages of the modular prefabricated petrol station of this disclosure can be summarized as follows:
1. It can be installed fast, not longer than 7-10 days are required, because it is fully integrated and largely pre-assembled;
2. Easy installation;
3. Accumulation capacity in line with current market requirements (approximately a volume of 24m³ of single product, the volume being split on request using a bicameral tank);
4. Modularity of the station by creating more interconnected islands, in case more quantities of product or different product types were needed;
5. Reduction of the risk of environmental pollution. All risky components are monitored continuously and segregated into appropriate collection containers (basin and channels);
6. Reduced cost, that is also diluted through monthly fees;
7. Possibility of removing and repositioning elsewhere the station, so the investment does not remain locally blocked if it is not profitable.

## Claims

1. A modular prefabricated petrol station, comprising:
a prefabricated basin (1), defining a housing delimited by a bottom floor and by side walls, said housing being adapted to contain and bear a fuel tank;
a fuel tank (2), said tank being contained inside said prefabricated basin (1);
an annular structure (5) distinct from said prefabricated basin (1), having side walls defining a bottom perimeter matching said upper side edges of the prefabricated basin (1), and installed upon said prefabricated basin (1) so as a bottom perimeter of the annular structure (5) coincides with the upper side edges of the basin (1);
supporting pillars (11) suitable for supporting a shelter (9);
**characterized in that**
it further comprises a first supporting frame (3) adapted to sustain a shelter (9), said first frame (3) comprising a first grid of traverses placed below at least said annular structure (5);
the supporting pillars (11) are fixed to said first grid of traverses;
it further comprises a second frame (4) distinct from said first supporting frame (3), having a second grid of traverses mounted suspended on said upper side edges of said annular structure (5), configured to sustain at least a fuel supply manhole (6) and at least an inspection manhole (7) in fluid communication with said tank (2), and for sustaining at least a fuel supply pump (8) connected to said fuel supply manhole (6).

2. The modular prefabricated petrol station according to claim 1, wherein said first grid of traverses is mounted suspended above the upper side edges of the lateral walls of said prefabricated basin (1) and below a bottom perimeter of the annular structure (5).

3. The modular prefabricated petrol station according to claim 1, wherein:
said first grid of traverses is laying on the bottom of a hole, with said basin (1) in said hole placed on said first grid of traverses;
said first supporting frame (3) further comprises buried pillars (14) fixed to said first grid of traverses and that rise upright therefrom along outer walls of said basin (1);
said supporting pillars (11) suitable for supporting a shelter (9) are fixed to said buried pillars (14).

4. The modular prefabricated petrol station according to claim 3, wherein
said first supporting frame (3) comprises two pairs of said buried pillars (14) and as many yoke traverses (15), the buried pillars (14) of each pair being joined by a respective traverse of said yoke traverses (15) that passes in grooves of said upper side edges of said annular structure (5);
each of said supporting pillars (11) for supporting a shelter (9) is fixed to a respective traverse of said yoke traverses (15).

5. The modular prefabricated petrol station according to claim 3 or 4, further comprising a third frame (16), distinct from the first supporting frame (3) and from the second supporting frame (4), having a third grid of traverses fixed to said buried pillars (14) and mounted upon the upper edged of the basin (1) and below the bottom edge of the annular structure (5).

6. The modular prefabricated petrol station according to one of claims from 1 to 5, wherein said prefabricated basin (1) is filled with a layer of sand (10) in which said fuel tank (2) is buried.

7. The modular prefabricated petrol station according to one of claims 1 to 6, comprising:
at least a fuel supply manhole (6) and at least an inspection manhole (7) installed on said second frame (4) and in fluid communication with said tank (2);
at least a fuel supply pump (8) installed on said second frame (4) and connected to said supply manhole (6).

8. The modular prefabricated petrol station according to claim 7, wherein said fuel tank (2) is a tank with one or more tight compartments, said modular prefabricated station comprising an inspection manhole (7) and a fuel supply manhole (6) for each of said tight compartments of the tank (2).

9. The modular prefabricated petrol station according to one of claims 2 or 5, further comprising an oil separator having:
- a collecting basin (12) adapted to collect water polluted with oils or hydrocarbons,
- a filter (13) preferably a coalescence filter, adapted to filter oils and hydrocarbons from said polluted water before discharging it.

10. The modular prefabricated petrol station according to one of claims from 1 to 9, wherein said supporting pillars (11) for supporting a shelter (9) are fixed to said first supporting frame (3) and pass throughout interstices of said second frame (4).

11. The modular prefabricated petrol station according to claim 10, comprising a shelter (9) mounted in a removable fashion on said at least two supporting pillars (11).

12. The modular prefabricated petrol station according to one of claims from 1 to 11, wherein said prefabricated basin (1) and said annular structure (5) are made of reinforced concrete.

13. A method of mounting a modular prefabricated petrol station according to claim 2 having:
a prefabricated basin (1), defining a housing delimited by a bottom floor and by side walls, said housing being adapted to contain and bear a fuel tank,
a fuel tank (2), said tank (2) being contained inside said prefabricated basin (1),
a first supporting frame (3) adapted to sustain a shelter and an oil separator (12, 13), said first frame (3) comprising a first grid of traverses mounted suspended on upper side edges of the side walls of said prefabricated basin (1), and supporting pillars (11) suitable for sustaining a shelter and fixed to said first grid of traverses;
an annular structure (5) distinct from said prefabricated basin (1), having side walls defining a bottom perimeter matching said upper side edges of the prefabricated basin (1),
a second frame (4) distinct from said first supporting frame (3), having a second grid of traverses mounted suspended on upper side edges of said annular structure (5), configured to sustain at least a fuel supply manhole (6) and at least an inspection manhole (7) in fluid communication with said tank (2), and for sustaining at least a fuel supply pump (8) connected to said fuel supply manhole (6),
said method comprising the following operations:
- burying said prefabricated basin (1) containing said fuel tank (2);
- installing the first supporting frame (3) on the prefabricated basin (1);
- installing an oil separator (12, 13) on the first supporting frame (3);
- installing said annular structure (5) on said prefabricated basin (1) so as its lower perimeter matches the upper side edges of the basin (1);
- installing said second frame (4) on said upper side edges of said annular structure (5);
- installing on said second frame (4) and in fluid communication with the tank (2), at least a fuel supply manhole (6), at least an inspection manhole (7) and at least a fuel supply pump (8) connected to the respective supply manhole (6);
- mounting at least two supporting pillars (11) for a shelter (9) on said first supporting frame (3) make them pass throughout interstices of the second frame (4);
- mounting a shelter (9) on said two supporting pillars (11).

14. A method of mounting a prefabricated modular petrol station according to claim 5 having:
a prefabricated basin (1), defining a housing delimited by a bottom floor and by side walls, said housing being adapted to contain and bear a fuel tank,
a fuel tank (2), said tank (2) being contained inside said prefabricated basin (1),
an annular structure (5) distinct from said prefabricated basin (1), having side walls defining a bottom perimeter matching said upper side edges of the prefabricated basin (1), and installed on said prefabricated basin (1) so as a bottom perimeter of the annular structure (5) matches with the upper side edges of the basin (1);
a first supporting frame (3) adapted to sustain a shelter (9), said first frame (3) comprising a first grid of traverses mounted on a bottom of a hole, said basin (1) in said hole laying on said first grid of traverses, and further comprising pairs of buried pillars (14), fixed to said first grid of traverses and that raise upright along outer walls of said basin (1), and as many yoke traverses (15);
supporting pillars (11) suitable for sustaining a shelter (9);
a second frame (4) distinct from said first supporting frame (3), having a second grid of traverses mounted suspended on upper side edges of said annular structure (5), configured to sustain at least a fuel supply manhole (6) and at least an inspection manhole (7) in fluid communication with said tank (2), and for sustaining at least a fuel supply pump (8) connected to said fuel supply manhole (6);
a third frame (16), distinct from the first supporting frame (3) and from the secon supporting frame (4), having a third grid of traverses fixed to said buried pillars (14) and mounted upon the upper edged of the basin (1) and below the bottom edge of the annular structure (5);
said method comprising the following operations:
- laying on a bottom of a hole said first grid of traverses;
- burying said prefabricated basin (1) containing said fuel tank (2);
- fixing said buried pillars (14) on said first grid of traverses;
- installing the third supporting frame (16) on the prefabricated basin (1);
- installing an oil separator (12, 13) on the third supporting frame (16);
- installing said annular structure (5) on said prefabricated basin (1) so as its lower perimeter matches the upper side edges of the basin (1);
- fixing said yoke traverses (15) on said upper side edges of said annular structure (5) for joining the buried pillars (14) of a same pair;
- installing an oil separator (12, 13) on said third supporting frame (16);
- installing said second frame (4) on said upper side edges of said annular structure (5);
- installing on said second frame (4) and in fluid communication with the tank (2), at least a fuel supply manhole (6), at least an inspection manhole (7) and at least a fuel supply pump (8) connected to the respective supply manhole (6);
- mounting at least two supporting pillars (11) for a shelter (9) on said yoke traverses (15) making them pass throughout interstices of the second frame (4);
- mounting a shelter (9) on said two supporting pillars (11).

## Patentansprüche

1. Modulare, vorgefertigte Tankstelle, aufweisend:
ein vorgefertigtes Becken (1), das eine Einhausung bildet, die durch einen Unterboden und durch Seitenwände begrenzt ist, wobei die Einhausung dazu angepasst ist, einen Kraftstofftank zu enthalten und zu tragen;
einen Kraftstofftank (2), wobei der Tank innerhalb des vorgefertigten Beckens (1) enthalten ist;
einen ringförmigen Aufbau (5), der vom vorgefertigten Becken (1) getrennt ist, Seitenwände hat, die einen unteren Umfang bilden, der mit oberseitigen Rändern des vorgefertigten Beckens (1) zusammenpasst, und auf dem vorgefertigten Becken (1) so installiert ist, dass der untere Umfang des ringförmigen Aufbaus (5) mit den oberseitigen Rändern des Beckens (1) übereinstimmt;
Stützpfeiler (11), die dazu geeignet sind, ein Schutzdach (9) zu stützen;
**dadurch gekennzeichnet, dass**
sie darüber hinaus einen ersten Tragrahmen (3) aufweist, der dazu angepasst ist, ein Schutzdach (9) zu tragen, wobei der erste Rahmen (3) ein erstes Traversengitter aufweist, das unterhalb zumindest des ringförmigen Aufbaus (5) angeordnet ist;
wobei die Stützpfeiler (11) am ersten Traversengitter befestigt sind;
wobei sie darüber hinaus einen zweiten Rahmen (4) aufweist, der vom ersten Tragrahmen (3) getrennt ist, ein zweites Traversengitter hat, das von den oberseitigen Rändern des ringförmigen Aufbaus (5) getragen gelagert ist, dazu ausgelegt ist, zumindest einen Kraftstoffzufuhrschacht (6) und zumindest einen Inspektionsschacht (7) zu tragen, die in Fluidverbindung mit dem Tank (2) stehen, und zumindest eine Kraftstoffzufuhrpumpe (8) zu tragen, die an den Kraftstoffzufuhrschacht (6) angeschlossen ist.

2. Modulare, vorgefertigte Tankstelle nach Anspruch 1, wobei das erste Traversengitter über den oberseitigen Rändern der Seitenwände des vorgefertigten Beckens (1) und unterhalb eines unteren Umfangs des ringförmigen Aufbaus (5) getragen gelagert ist.

3. Modulare, vorgefertigte Tankstelle nach Anspruch 1, wobei:
das erste Traversengitter auf dem Boden einer Ausschachtung aufliegt, wobei das Becken (1) in der Ausschachtung auf dem ersten Traversengitter angeordnet ist;
wobei der erste Tragrahmen (3) darüber hinaus versenkte Grundpfeiler (14) aufweist, die am ersten Traversengitter befestigt sind und sich von diesem entlang von Außenwänden des Beckens (1) senkrecht nach oben erheben;
wobei die Stützpfeiler (11), die dazu geeignet sind, ein Schutzdach (9) zu stützen, an den versenkten Grundpfeilern (14) befestigt sind.

4. Modulare, vorgefertigte Tankstelle nach Anspruch 3, wobei
der erste Tragrahmen (3) zwei Paare der versenkten Grundpfeiler (14) und ebenso viele Querstreben (15) aufweist, die versenkten Grundpfeiler (14) jedes Paars über eine jeweilige Traverse der Querstreben (15) verbunden sind, die in Aussparungen der oberseitigen Ränder des ringförmigen Aufbaus (5) verläuft;
jeder der Stützpfeiler (11) zum Stützen eines Schutzdachs (9) an einer jeweiligen Traverse der Querstreben (15) befestigt ist.

5. Modulare, vorgefertigte Tankstelle nach Anspruch 3 oder 4, darüber hinaus einen dritten Rahmen (16) aufweisend, der vom ersten Tragrahmen (3) und zweiten Tragrahmen (4) getrennt ist, ein drittes Traversengitter hat, das an den versenkten Grundpfeilern (14) befestigt ist, und auf dem oberen Rand des Beckens (1) und unterhalb des unteren Rands des ringförmigen Aufbaus (5) gelagert ist.

6. Modulare, vorgefertigte Tankstelle nach einem der Ansprüche 1 bis 5, wobei das vorgefertigte Becken (1) mit einer Sandschicht (10) befüllt ist, in welcher der Kraftstofftank (2) eingebettet ist.

7. Modulare, vorgefertigte Tankstelle nach einem der Ansprüche 1 bis 6, aufweisend:
zumindest einen Kraftstoffzufuhrschacht (6) und zumindest einen Inspektionsschacht (7), die am zweiten Rahmen (4) installiert sind und in Fluidverbindung mit dem Tank (2) stehen;
zumindest eine Kraftstoffzufuhrpumpe (8), die am zweiten Rahmen (4) installiert und an den Zufuhrschacht (6) angeschlossen ist.

8. Modulare, vorgefertigte Tankstelle nach Anspruch 7, wobei der Kraftstofftank (2) ein Tank mit einer oder mehreren dichten Kammern ist, wobei die modulare, vorgefertigte Tankstelle für jede der dichten Kammern des Tanks (2) einen Inspektionsschacht (7) und einen Kraftstoffzufuhrschacht (6) aufweist.

9. Modulare, vorgefertigte Tankstelle nach einem der Ansprüche 2 oder 5, darüber hinaus mit einem Ölabscheider, der Folgendes aufweist:
- ein Auffangbecken (12), das dazu angepasst ist, Wasser aufzufangen, das mit Ölen oder Kohlenwasserstoffen verschmutzt ist,
- einen Filter (13), vorzugsweise einen Koaleszenzfilter, der dazu angepasst ist, Öle und Kohlenwasserstoffe aus dem verschmutzten Wasser herauszufiltern, bevor es abgelassen wird.

10. Modulare, vorgefertigte Tankstelle nach einem der Ansprüche 1 bis 9, wobei die Stützpfeiler (11) zum Stützen eines Schutzdachs (9) am ersten Tragrahmen (3) befestigt sind und durch Lücken des zweiten Rahmens (4) verlaufen.

11. Modulare, vorgefertigte Tankstelle nach Anspruch 10, mit einem Schutzdach (9), das an den mindestens zwei Stützpfeilern (11) abnehmbar gelagert ist.

12. Modulare, vorgefertigte Tankstelle nach einem der Ansprüche 1 bis 11, wobei das vorgefertigte Becken (1) und der ringförmige Aufbau (5) aus Stahlbeton bestehen.

13. Verfahren zum Zusammenbauen einer modularen, vorgefertigten Tankstelle nach Anspruch 2, aufweisend:
ein vorgefertigtes Becken (1), das eine Einhausung bildet, die durch einen Unterboden und durch Seitenwände begrenzt ist, wobei die Einhausung dazu angepasst ist, einen Kraftstofftank zu enthalten und zu tragen,
einen Kraftstofftank (2), wobei der Tank (2) innerhalb des vorgefertigten Beckens (1) enthalten ist,
einen ersten Tragrahmen (3), der dazu angepasst ist, ein Schutzdach und einen Ölabscheider (12, 13) zu tragen, wobei der erste Rahmen (3) ein erstes Traversengitter aufweist, das von den oberseitigen Rändern der Seitenwände des vorgefertigten Beckens (1) getragen gelagert ist, und Stützpfeiler (11), die dazu geeignet sind, ein Schutzdach zu tragen, und am ersten Traversengitter befestigt sind;
einen ringförmigen Aufbau (5), der vom vorgefertigten Becken (1) getrennt ist, mit Seitenwänden, die einen unteren Umfang bilden, der mit den oberseitigen Rändern des vorgefertigten Beckens (1) zusammenpasst,
einen zweiten Rahmen (4), der vom ersten Tragrahmen (3) getrennt ist, ein zweites Traversengitter hat, das von den oberseitigen Rändern des ringförmigen Aufbaus (5) getragen gelagert ist, dazu ausgelegt ist, zumindest einen Kraftstoffzufuhrschacht (6) und zumindest einen Inspektionsschacht (7) zu tragen, die in Fluidverbindung mit dem Tank (2) stehen, und zumindest eine Kraftstoffzufuhrpumpe (8) zu tragen, die an den Kraftstoffzufuhrschacht (6) angeschlossen ist,
wobei das Verfahren die folgenden Arbeitsschritte umfasst:
- Einbetten des vorgefertigten Beckens (1), das den Kraftstofftank (2) enthält;
- Installieren des ersten Tragrahmens (3) am vorgefertigten Becken (1);
- Installieren eines Ölabscheiders (12, 13) am ersten Tragrahmen (3);
- Installieren des ringförmigen Aufbaus (5) am vorgefertigten Becken (1) in der Weise, dass sein unterer Umfang mit den oberseitigen Rändern des Beckens (1) zusammenpasst;
- Installieren des zweiten Rahmens (4) an den oberseitigen Rändern des ringförmigen Aufbaus (5);
- Installieren, am zweiten Rahmen (4) und in Fluidverbindung mit dem Tank (2), zumindest eines Kraftstoffzufuhrschachts (6), zumindest eines Inspektionsschachts (7) und zumindest einer Kraftstoffzufuhrpumpe (8), die an den jeweiligen Zufuhrschacht (6) angeschlossen ist;
- Anbringen von mindestens zwei Stützpfeilern (11) für ein Schutzdach (9) am ersten Tragrahmen (3), wobei man sie durch Lücken des zweiten Rahmens (4) verlaufen lässt;
- Anbringen eines Schutzdachs (9) an den zwei Stützpfeilern (11).

14. Verfahren zum Zusammenbauen einer vorgefertigten, modularen Tankstelle nach Anspruch 5, aufweisend:
ein vorgefertigtes Becken (1), das eine Einhausung bildet, die durch einen Unterboden und durch Seitenwände begrenzt ist, wobei die Einhausung dazu angepasst ist, einen Kraftstofftank zu enthalten und zu tragen,
einen Kraftstofftank (2), wobei der Tank (2) innerhalb des vorgefertigten Beckens (1) enthalten ist,
einen ringförmigen Aufbau (5), der vom vorgefertigten Becken (1) getrennt ist, Seitenwände hat, die einen unteren Umfang bilden, der mit den oberseitigen Rändern des vorgefertigten Beckens (1) zusammenpasst, und am vorgefertigten Becken (1) so installiert ist, dass ein unterer Umfang des ringförmigen Aufbaus (5) mit den oberseitigen Rändern des Beckens (1) zusammenpasst;
einen ersten Tragrahmen (3), der dazu angepasst ist, ein Schutzdach zu tragen, wobei der erste Rahmen (3) ein erstes Traversengitter aufweist, das auf einem Boden einer Ausschachtung gelagert ist, wobei das Becken (1) in der Ausschachtung auf dem ersten Traversengitter aufliegt, und darüber hinaus Paare von versenkten Grundpfeilern (14) aufweist, die am ersten Traversengitter befestigt sind und sich entlang von Außenwänden des Beckens (1) senkrecht nach oben erheben, und ebenso viele Querstreben (15);
Stützpfeiler (11), die dazu geeignet sind, ein Schutzdach (9) zu tragen;
einen zweiten Rahmen (4), der vom ersten Tragrahmen (3) getrennt ist, ein zweites Traversengitter hat, das von den oberseitigen Rändern des ringförmigen Aufbaus (5) getragen gelagert ist, dazu ausgelegt ist, zumindest einen Kraftstoffzufuhrschacht (6) und zumindest einen Inspektionsschacht (7) zu tragen, die in Fluidverbindung mit dem Tank (2) stehen, und zumindest eine Kraftstoffzufuhrpumpe (8) zu tragen, die an den Kraftstoffzufuhrschacht (6) angeschlossen ist;
einen dritten Rahmen (16), der vom ersten Tragrahmen (3) und zweiten Tragrahmen (4) getrennt ist, ein drittes Traversengitter hat, das an den versenkten Grundpfeilern (14) befestigt ist, und auf dem oberen Rand des Beckens (1) und unterhalb des unteren Rands des ringförmigen Aufbaus (5) gelagert ist;
wobei das Verfahren die folgenden Arbeitsschritte umfasst:
- Auflegen des ersten Traversengitters auf einen Boden einer Ausschachtung;
- Einbetten des vorgefertigten Beckens (1), das den Kraftstofftank (2) enthält;
- Befestigen der versenkten Grundpfeiler (14) am ersten Traversengitter;
- Installieren des dritten Tragrahmens (16) am vorgefertigten Becken (1);
- Installieren eines Ölabscheiders (12, 13) am dritten Tragrahmen (16);
- Installieren des ringförmigen Aufbaus (5) an dem vorgefertigten Becken (1) in der Weise, dass sein unterer Umfang mit den oberseitigen Rändern des Beckens (1) zusammenpasst;
- Befestigen der Querstreben (15) an den oberseitigen Rändern des ringförmigen Aufbaus (5), um die versenkten Grundpfeiler (14) desselben Paars zu verbinden;
- Installieren eines Ölabscheiders (12, 13) am dritten Tragrahmen (16);
- Installieren des zweiten Rahmens (4) an den oberseitigen Rändern des ringförmigen Aufbaus (5);
- Installieren, am zweiten Rahmen (4) und in Fluidverbindung mit dem Tank (2), zumindest eines Kraftstoffzufuhrschachts (6), zumindest eines Inspektionsschachts (7) und zumindest einer Kraftstoffzufuhrpumpe (8), die an den jeweiligen Zufuhrschacht (6) angeschlossen ist;
- Anbringen zumindest zweier Stützpfeiler (11) für ein Schutzdach (9) an den Querstreben (15), wobei man sie durch Lücken des zweiten Rahmens (4) verlaufen lässt;
- Anbringen eines Schutzdachs (9) an den zwei Stützpfeilern (11).

## Revendications

1. Station essence préfabriquée modulaire comprenant :
un bassin préfabriqué (1) définissant un logement délimité par un plancher inférieur et par des parois latérales, ledit logement étant adapté pour contenir et supporter une cuve de carburant ;
une cuve de carburant (2), ladite cuve étant contenue à l'intérieur dudit bassin préfabriqué (1) ;
une structure annulaire (5) distincte dudit bassin préfabriqué (1), ayant des parois latérales définissant un périmètre inférieur correspondant auxdits bords latéraux supérieurs du bassin préfabriqué (1) et installée sur ledit bassin préfabriqué (1) afin qu'un périmètre inférieur de la structure annulaire (5) coïncide avec les bords latéraux supérieurs du bassin (1) ;
des piliers de support (11) appropriés pour supporter un abri (9) ;
**caractérisée en ce que** :
elle comprend en outre un premier bâti de support (3) adapté pour soutenir un abri (9), ledit premier bâti (3) comprend une première grille de traverses placée au-dessous d'au moins ladite structure annulaire (5) ;
les piliers de support (11) sont fixés sur ladite première grille de traverses ;
elle comprend en outre un deuxième bâti (4) distinct dudit premier bâti de support (3), ayant une deuxième grille de traverses montée en suspension sur lesdits bords latéraux supérieurs de ladite structure annulaire (5), configurée pour soutenir au moins un regard d'alimentation en carburant (6) et au moins un regard de contrôle (7) en communication de fluide avec ladite cuve (2), et pour soutenir au moins une pompe d'alimentation en carburant (8) raccordée audit regard d'alimentation en carburant (6).

2. Station essence préfabriquée modulaire selon la revendication 1, dans laquelle ladite première gille de traverses est montée en suspension au-dessus des bords latéraux supérieurs des parois latérales dudit bassin préfabriqué (1) et au-dessous d'un périmètre inférieur de la structure annulaire (5).

3. Station essence préfabriquée modulaire selon la revendication 1, dans laquelle :
ladite première grille de traverses est sur le fond d'un trou, avec ledit bassin (1) dans ledit trou, placé sur ladite première grille de traverses ;
ledit premier bâti de support (3) comprend en outre des piliers enterrés (14) fixés sur ladite première grille de traverses et qui remontent à partir de cette dernière le long des parois externes dudit bassin (1) ;
lesdits piliers de support (11) appropriés pour supporter un abri (9) sont fixés sur lesdits piliers enterrés (14).

4. Station essence préfabriquée modulaire selon la revendication 3, dans laquelle :
ledit premier boîtier de support (3) comprend deux paires desdits piliers enterrés (14) et autant de traverses d'étrier (15), les piliers enterrés (14) de chaque paire étant assemblés par une traverse respective desdites traverses d'étrier (15) qui passe dans des rainures desdits bords latéraux supérieurs de ladite structure annulaire (5) ;
chacun desdits piliers de support (11) pour supporter un abri (9) est fixé sur une traverse respective desdites traverses d'étrier (15).

5. Station essence préfabriquée modulaire selon la revendication 3 ou 4, comprenant en outre un troisième bâti (16) distinct du premier bâti de support (3) et du deuxième bâti de support (4) ayant une troisième grille de traverses fixée sur lesdits piliers enterrés (14) et montée sur le bord supérieur du bassin (1) et au-dessous du bord inférieur de la structure annulaire (5).

6. Station essence préfabriquée modulaire selon l'une des revendications 1 à 5, dans laquelle ledit bassin préfabriqué (1) est rempli avec une couche de sable (10) dans laquelle ladite cuve de carburant (2) est enterrée.

7. Station essence préfabriquée modulaire selon l'une des revendications 1 à 6, comprenant :
au moins un regard d'alimentation en carburant (6) et au moins un regard de contrôle (7) installé sur ledit deuxième bâti (4) et en communication de fluide avec ladite cuve (2) ;
au moins une pompe d'alimentation en carburant (8) installée sur ledit deuxième bâti (4) et raccordée audit regard d'alimentation (6).

8. Station essence préfabriquée modulaire selon la revendication 7, dans laquelle ladite cuve de carburant (2) est une cuve avec un ou plusieurs compartiments étanches, ladite station préfabriquée modulaire comprenant un regard de contrôle (7) et un regard d'alimentation en carburant (6) pour chacun desdits compartiments étanches de la cuve (2).

9. Station essence préfabriquée modulaire selon l'une des revendications 2 ou 5, comprenant en outre un séparateur d'huile ayant :
un bassin de collecte (12) adapté pour collecter l'eau polluée avec des huiles ou des hydrocarbures,
un filtre (13) de préférence un filtre à coalescence, adapté pour filtrer les huiles et les hydrocarbures de ladite eau polluée avant de la décharger.

10. Station essence préfabriquée modulaire selon l'une des revendications 1 à 9, dans laquelle lesdits piliers de support (11) pour supporter un abri (9) sont fixés sur ledit premier bâti de support (3) et passent à travers des interstices dudit deuxième bâti (4).

11. Station essence préfabriquée modulaire selon la revendication 10, comprenant un abri (9) monté d'une manière amovible sur lesdits au moins deux piliers de support (11).

12. Station essence préfabriquée modulaire selon l'une des revendications 1 à 11, dans laquelle ledit bassin préfabriqué (1) et ladite structure annulaire (5) sont réalisés à partir de béton renforcé.

13. Procédé pour monter une station essence préfabriquée modulaire selon la revendication 2 ayant :
un bassin préfabriqué (1) définissant un logement délimité par un plancher inférieur et par des parois latérales, ledit logement étant adapté pour contenir et supporter une cuve de carburant,
une cuve de carburant (2), ladite cuve (2) étant contenue à l'intérieur dudit bassin préfabriqué (1),
un premier bâti de support (3) adapté pour soutenir un abri et un séparateur d'huile (12, 13), ledit premier bâti (3) comprenant une première grille de traverses montée en suspension sur des bords latéraux supérieurs des parois latérales dudit bassin préfabriqué (1) et des piliers de support (11) appropriés pour soutenir un abri et fixés sur ladite première grille de traverses ;
une structure annulaire (5) distincte dudit bassin préfabriqué (1), ayant des parois latérales définissant un périmètre inférieur correspondant auxdits bords latéraux supérieurs du bassin préfabriqué (1),
un deuxième bâti (4) distinct dudit premier bâti de support (3), ayant une deuxième grille de traverses montée en suspension sur les bords latéraux supérieurs de ladite structure annulaire (5), configurée pour soutenir au moins un regard d'alimentation en carburant (6) et au moins un regard de contrôle (7) en communication de fluide avec ladite cuve (2) et pour soutenir au moins une pompe d'alimentation en carburant (8) raccordée audit regard d'alimentation en carburant (6),
ledit procédé comprenant les étapes suivantes :
enterrer ledit bassin préfabriqué (1) contenant ladite cuve de carburant (2) ;
installer le premier bâti de support (3) sur le bassin préfabriqué (1) ;
installer un séparateur d'huile (12, 13) sur le premier bâti de support (3) ;
installer ladite structure annulaire (5) sur ledit bassin préfabriqué (1) afin que son périmètre inférieur corresponde aux bords latéraux supérieurs du bassin (1) ;
installer ledit deuxième bâti (4) sur lesdits bords latéraux supérieurs de ladite structure annulaire (5) ;
installer, sur ledit deuxième bâti (4) et en communication de fluide avec la cuve (2), au moins un regard d'alimentation en carburant (6), au moins un regard de contrôle (7) et au moins une pompe d'alimentation en carburant (8) raccordée au regard d'alimentation (6) respectif ;
monter au moins deux piliers de support (11) pour un abri (9) sur ledit premier bâti de support (3), en les faisant passer à travers des interstices du deuxième bâti (4) ;
monter un abri (9) sur lesdits deux piliers de support (11).

14. Procédé pour monter une station essence préfabriquée modulaire selon la revendication 5, ayant :
un basin préfabriqué (1), définissant un logement délimité par un plancher inférieur et par des parois latérales, ledit logement étant adapté pour contenir et supporter une cuve de carburant,
une cuve de carburant (2), ladite cuve (2) étant contenue à l'intérieur dudit basin préfabriqué (1),
une structure annulaire (5) distincte dudit bassin préfabriqué (1), ayant des parois latérales définissant un périmètre inférieur correspondant auxdits bords latéraux supérieurs du bassin préfabriqué (1) et installées sur ledit bassin préfabriqué (1) afin qu'un périmètre inférieur de la structure annulaire (5) corresponde aux bords latéraux supérieurs du bassin (1) ;
un premier bâti de support (3) adapté pour soutenir un abri (9), ledit premier bâti (3) comprenant une première grille de traverses montée sur un fond d'un trou, ledit bassin (1) dans ledit trou se trouvant sur ladite première grille de traverses, et comprenant en outre des paires de piliers enterrés (14) fixés sur ladite première grille de traverse et qui remontent le long des parois externes dudit bassin (1) et autant de traverses d'étrier (15) ;
supporter des piliers (11) appropriés pour soutenir un abri (9) ;
un deuxième bâti (4) distinct dudit premier bâti de support (3) ayant une deuxième grille de traverses montée en suspension sur des bords latéraux supérieurs de ladite structure annulaire (5), configurée pour soutenir au moins un regard d'alimentation en carburant (6) et au moins un regard de contrôle (7) en communication de fluide avec ladite cuve (2) et pour soutenir au moins une pompe d'alimentation en carburant (8) raccordée audit regard d'alimentation en carburant (6) ;
un troisième bâti (16) distinct de premier bâti de support (3) et du deuxième bâti de support (4), ayant une troisième grille de traverses fixée sur lesdits piliers enterrés (14) et montée sur le bord supérieur du bassin (1) et au-dessous du bord inférieur de la structure annulaire (5) ;
ledit procédé comprend les étapes suivantes :
placer sur un fond d'un trou, ladite première grille de traverses ;
enterrer ledit bassin préfabriqué (1) contenant ladite cuve de carburant (2) ;
fixer lesdits piliers enterrés (14) sur ladite première grille de traverses ;
installer le troisième bâti de support (16) sur le bassin préfabriqué (1) ;
installer un séparateur d'huile (12, 13) sur le troisième bâti de support (16) ;
installer ladite structure annulaire (5) sur ledit bassin préfabriqué (1) afin que son périmètre inférieur corresponde aux bords latéraux supérieurs du bassin (1) ;
fixer lesdites traverses d'étrier (15) sur lesdits bords latéraux supérieurs de ladite structure annulaire (5) pour assembler les piliers enterrés (14) d'une même paire ;
installer un séparateur d'huile (12, 13) sur ledit troisième bâti de support (16) ;
installer ledit deuxième bâti de support (4) sur lesdits bords latéraux supérieurs de ladite structure annulaire (5) ;
installer sur ledit deuxième bâti (4) et en communication de fluide avec la cuve (2), au moins un regard d'alimentation en carburant (6), au moins un regard de contrôle (7) et au moins une pompe d'alimentation de carburant (8) raccordée au regard d'alimentation (6) respectif ;
monter au moins deux piliers de support (11) pour un abri (9) sur lesdites traverses d'étrier (15) en les faisant passer par des interstices du deuxième bâti (4) ;
monter un abri (9) sur lesdits deux piliers de support (11).
